# EUROPEAN PATENT APPLICATION

(11) **EP 3 062 010 A1**
(43) Date of publication of application: **31.08.2016**
(21) Application number: 16157119.5
(22) Date of filing: 24.02.2016
(51) Int. Cl.: F16L 55/165

(54) **LINER AND METHOD FOR MONITORING OF QUALITY OF PIPELINE RENOVATION AFTER RENOVATION**

(30) Priority: 25.02.2015 FI 20155127
(71) Applicant: PipeSol Oy, 20200 Turku (FI)
(72) Inventor: VUORINEN, Tomi-Pekka, 20900 Turku (FI); RAUTILA, Pekka, 24280 Salo (FI); HOFFREN, Esa, 20660 Littoinen (FI)
(74) Representative: Turun Patenttitoimisto Oy

(57) **Abstract**

The object of the invention is a liner (11, 21, 43) and a method for monitoring of quality of pipeline renovation after the renovation. The liner according to the invention (11, 21, 43) is meant to be cured inside a pipe (2, 4, 5, 42) to be repaired, for example a pipe to be coated. There is at least one sensor (45, 46, 47, 48) attached to the liner that is fitted to monitor, that is to measure, humidity level of the renovated pipeline or its surroundings.

## Description

### TECHNICAL FIELD OF THE INVENTION

The object of the invention is a liner and a method for monitoring of quality of pipeline renovation after renovation according to the preambles of the independent claims presented below.

### PRIOR ART

Prior art procedure for coating a sewer branch point by lining, for example, is usually the following:
A. A liner is installed into a main pipe and is let to be cured.
B. The cured liner is opened at side pipes, that is at a branch point, for example by drilling.
C. A small branch piece partly entering the main pipe is installed at the branch point. The branch piece is cured.
D. After the branch piece is cured, a required number of additional liners may be connected to it from the side pipe. In case additional liners require branches, new branch pieces are drilled and added in accordance with the above mentioned steps A-C.

Examples of the problems in the current technology are:
- Work stages are challenging, investments for constant education of staff have to be made, and yet variations in quality are high.
- Work is slow as several work stages demand time, and there is lot of waiting time between different stages.
- Several machines are needed, which means plenty of capital.
- Pipe diameter diminishes greatly at the branch points, and thus, blockage risks increase.
- Several joints increase risk for leakage.

Current solutions do not sufficiently enable monitoring pipeline after renovation. It is important to be aware of leakages, for example, as soon as possible.

Problems appearing in pipeline branch points while lining have been tried to be solved also earlier. In patent publication EP0506181 A1, for example, tightness of the branch point is solved by means of a special seal solution. Patent publication US 2014/0027000 A1 shows monitoring the process of repairing a pipe by means of different sensors.

### OBJECT OF THE INVENTION

The object of the present invention is to reduce or even eliminate the above-mentioned problems appearing in prior art.

An object of the invention is to enable later monitoring and quality assurance of the performed renovation so that large water damages are prevented.

An object of the invention is to provide a method and a system with which economics and scheduling of the pipeline renovation and monitoring of the condition of the renovated pipeline are made more efficient.

An object of the invention is to facilitate and simplify lining method of pipelines.

An object of the invention is to reveal more efficiently possible leakage points in the pipeline.

An object of the invention is good renovation quality.

Objects of the invention are to make more efficient for example the following:
- lining of pipelines comprising several branch points,
- lining of vertical sewer of multi-storey buildings, such as block of flats,
- lining of mainly lateral sewer pipelines,
- lining of apartment or home sewer pipes.

One object of the invention is to diminish or entirely eliminate drilling or the like working of holes commonly used in lining.

### BRIEF DESCRIPTION OF THE INVENTION

In order to achieve among others the objects mentioned above, the liner and the method and other objects of the invention are characterised by what is presented in the characterising parts of the enclosed independent claims.

The embodiment examples and advantages mentioned in this text relate, where applicable, to both the liner and the method according to the invention, even if this is not always specifically mentioned.

Renovation of pipelines by lining is known as such. The different embodiments of the invention are applicable for use together with different liners and liner curing materials, such as epoxy and mass.

The invention is applicable for renovating for example sewers, industrial pipelines and district heating pipelines by coating them from inside.

A typical liner according to the invention is intended to be cured inside the pipe to be repaired, for example a pipe to be coated. At least one sensor is attached to the liner, which sensor is fitted to monitor, that is to measure humidity level of the renovated pipeline or its surroundings.

In a typical method according to the invention for monitoring of quality of pipeline renovation after the renovation, the humidity level of the renovated pipeline or its surroundings is measured by means of at least one sensor attached to a liner that has been cured inside the repaired or coated pipe.

The system according to the invention may comprise a liner provided with one or several sensors. The liner is typically flexible. The liners used in pipeline renovation are prior art known as such, and their structure or functioning will not be described in more detail in this application.

In one embodiment of the invention, at least one sensor is attached to the liner to monitor, that is to measure temperature level of the renovated pipeline or its surroundings. Temperature and its change can be used for determining humidity level more accurately, for example.

In one embodiment, the sensor is adapted to monitor, that is to measure, the amount of microbies or biofilm. By means of such sensor, for example a so called biofilm detector, it is possible to detect unwanted growth caused by leakage, for example, in good time.

A liner according to the invention may comprise a protective bag or protective layer surrounding the liner. The purpose of the protective bag or protective layer is, for example, to protect the liner and facilitate fitting of the liner, for example transferring the liner to the installation destination, inside the pipeline.

The sensor may comprise data transfer means by which the information measured by the sensor can be sent to a suitable receiver. Information can be further transferred to a computer program monitoring the condition of the pipeline, for example. Data transfer means may be wired or wireless, for example data transfer means functioning by RFID (Radio Frequency Identification) or NFC (Near Field Communication) technology.

Sensors, such as humidity sensors and temperature sensors, as well as data transfer, are known prior art as such, and their structure or functioning will not be described here in more detail.

A liner provided with a sensor may be without branch points, or the liner may have at least one branch point. More than two liner branches may extend from a branch point. In one embodiment, the liner has at least one branch point, where more than two branches branch from, each branch being at least 0.5 m long. In one embodiment, a sensor is attached close to the liner branch point, for example less than 0.5 m or less than 0.2 m from a junction of two branches. In one embodiment, a sensor is attached close to the end of the liner branch, that is close to the end of entire lining or close to the joint of two liners, for example less than 0.5 m or less than 0.2 m from the end of the liner branch. Branch points and joints are possible leakage points of the lining, being thus good places for sensors.

A sensor may be attached to a desired place in the liner, or possibly in a protective bag or protective layer to be used surrounding the liner. The sensors may be attached already at the production stage of the liner, or only at the working site. The attachment may be performed by gluing, taping, sewing or printing, for example. Gluing can be performed by means of heat by ironing, for example. The sensors can also be attached onto the liner, or onto the protective bag or protective layer used for fitting it, by means of a band or the like circulating it or them.

In one embodiment, the sensor is attached directly to a pipe to be renovated, and the liner is cured onto the sensor.

In one embodiment, the sensor, such as a RFID or a NFC sensor, may be placed on an attaching base which is attached to the liner or to the protective bag or protective layer surrounding it, or directly to the pipe to be renovated. The attaching base can be an originally separate part of the liner, protective bag or protective layer, which is then attached to the liner, protective bag or protective layer, or directly to the pipe to be renovated. The attaching base may be water permeable or waterproof, for example fabric or plastic. In one embodiment, the sensor is integrated to the attaching base by means of printing techniques. The attaching base can be, for example slightly greater in its surface area than the sensor fitted in it, whereby there is some space left around the sensor for being attached to the liner, for example.

Waterproof attaching base can prevent humidity from entering to the sensor from the direction of the attaching base. Placement of the sensor, and, for example waterproofness of the attaching base, can be used for guiding the direction from where the moisture leaks that the sensor especially measures, come from.

In one embodiment, the sensor is integrated directly to the inner or outer surface of the protective bag, or onto the surface of the liner by printing technique. One advantage of this technique is that it facilitates placing of the sensors to several places in the liner, even along the whole length of the liner. This way, the sensors provide measuring results covering wide measuring area.

A liner that is provided with a sensor suits very well to be used in a method according to the invention, wherein renovation quality is monitored after the renovation. Measuring results by the sensor can be read in determined intervals, for example once a month, several times a year, or once a year. Measuring results by the sensor can be read also more often, basically measuring results can be read and shown continuously online. Information can be read, for example with a separate reading device known as such, which is moved inside the pipeline, for example at the end of a wire, and/or combined to a camera. The reading device communicates with the sensor and can save the results to its memory. Reading device can be taken to the vicinity of the sensors outside the pipeline, or inside the pipeline. In some cases, measuring results from the sensors can also be read from a distance with a more efficient wireless reader or terminal. Reading device can forward the information in a system wirelessly or through wires. Information can be sent to a reporting system, for example to a program monitoring of condition of the pipeline, to a reporting software, or to an electric measuring register, which can be delivered to a housing cooperative, for example. Sensors can be connected to the reporting system also through wires, for example via conductors attached to the liner, protective pipe, or protective layer.

Sensors can, for example, send information on the measured factors, such as humidity and temperature, and its own identification information, to the reading device, or directly to the reporting system. Identification information may comprise, for example information on precise sensor location, sensor installation time, sensor type.

By means of the invention, even real time surveillance of the problems, such as leakages, can be achieved. Thus, in an ideal situation, water damages can be almost totally prevented as far as renovated sewers are concerned. Also in a worse situation, water damage area and repairing costs can be minimised.

In one embodiment of the invention, the liners are precisely placed into known locations in the pipeline, and the location of the sensors in each liner is precisely known. Thus, the invention enables easy and handy placing of the sensors precisely into desired places in the pipeline while renovating the pipeline. By means of the invention, the sensors can be installed into places where the measuring results provide desired and correct information about the circumstances and prevailing conditions of the renovated line.

In one embodiment of the invention, alarm limits are set in the system for humidity or temperature or for other factors measured by the sensors. When the measuring results of the sensors exceed or go under the alarm limits, system user receives an alarm. Thus, it can be recommended to perform a fast repair procedure. For example, if the humidity level in some sensor exceeds the predetermined alarm level, the system user can be given an alarm, and the user can be told exact location of the alarming sensor.

The liner according to the invention provided with a sensor suits excellently as part of the system mentioned in this text, the system being intended for coating the branching pipelines, such as sewers, from inside the pipes. The said system functions well also without the sensors according to the invention. By using liners according to the invention provided with a sensor together with the said system, an especially efficient and safe way of renovating pipelines is obtained.

A liner according to the invention provided with a sensor suits excellently to be used in a method mentioned further in this text for coating branching pipelines, such as sewers, from inside the pipes. The said system functions well also without the sensors according to the invention. By using liners according to the invention provided with a sensor together with the said system, an especially efficient and safe way of renovating pipelines is obtained.

A liner according to the invention can be used, for example in a method for coating branching pipelines, such as sewers, from inside the pipes, which method comprises at least the following steps:
- installing a first flexible liner having more than two branches inside the pipeline to be renovated, to the first branching point of the pipeline, where more than two pipe sections branch;
- fitting each branch of the first liner into its own branching pipe section;
- curing each branch of the first liner into its own branching pipe section;
- installing a second flexible liner, which has more than two branches inside the pipeline to be renovated, to the second pipeline branching point, where more than two pipe sections branch;
- fitting each branch of the second liner into its own branching pipe section;
- curing each branch of the second liner into its own branching pipe section;
- installing a branch of the second liner directly after the branch of the first liner in a joint,
whereby
- while curing the liners, a branch of the first liner and a branch of the second liner are connected tightly to each other at the joint.

The invention can be used in a system that is intended for coating branching pipelines, such as sewers, inside the pipes. A typical such system comprises a flexible liner that is intended to be cured inside the pipe to be coated, and that may have a branch point where more than two branches branch from. Advantageous application of the invention comprises at least two liners adapted to be installed successively into each other.

By means of the branching liners, that is by means of branch pieces according to one embodiment of the invention, a sewerage can be lined efficiently without need for drilling. By means of the invention, the amount of the joints between the liners is minimised. At the same time, roughness and discontinuity areas in the pipeline, that is the amount of protrusions forming into the joints of the liners, has been minimised. By means of the invention, the pipeline is renovated in such a manner that double thick areas caused by superposed liners will appear only in the joints of the liners according to the invention, where sufficient overlapping joint is used, for example. Usually, the liners are cured close to the inner surface of the pipe, often as tightly as possible against the inner surface of the pipe.

By means of the branching liners, the pipeline renovation can be performed with as few work phases as possible. Renovation can be performed according to need by means of variable modular liners, for example by traditional non-branching liners or by so called T or Y liners comprising three branches. There can also be more branches, for example a liner extending from one branch point to four directions can be called X liner. All measures of the liner and their branches, for example branch lengths, diameters and angles between the branches, can be varied. The branches in the liner can be straight, or they may have one or several bends.

In one embodiment of the invention,
- branch of the first liner and branch of the second liner are connected tightly to each other at a joint, which is at a distance from the first as well as from the second branch point of the pipeline. The said distance can be, for example, at least 0.2 m, at least 0.5 m, at least 1 m, or at least 2 m.
Joints in the liners, that is possible roughness, are thus prevented from forming especially in the pipeline branch points, where the risk of clogging is the greatest.

In one embodiment of the invention, the pipeline to be renovated comprises a sewer pipeline of a multi-storey building having a vertical sewer, and pipe sections extending therefrom at the storeys. Thus,
- several liners are installed successively into the vertical sewer of the building, each liner comprising a branch that is intended upwards and downwards in the vertical sewer, and at least one branch branching at the storey.
- branches of the successive liners which are intended upwards and downwards in the vertical sewer are connected to each other,
- a branch of each liner branching from it at the storey is fitted in its own pipe section branching at the storey.

This way, it is possible to coat by lining even the entire vertical sewer of a multi-storey building without drilling or the like making of holes in accordance with the invention.

In one embodiment of the invention, the pipeline to be renovated comprises an apartment or house sewer having several pipe sections branching from each other, whereby
- at least two liners comprising more than two branches are installed successively into an apartment or house sewer.
An apartment or house sewer is a sewer section often mainly horizontally branching from a vertical sewer. This way, it is possible to coat by lining even the entire apartment or house sewer, in accordance with the invention without drilling or the like making of holes.

In some cases, it is possible to line an entire apartment or house sewer with one flexible liner comprising more than two branches.

In one embodiment of the invention, the pipeline to be renovated comprises a sewer pipeline of a multi-storey building having a vertical sewer, and pipe sections of an apartment or house sewer branching therefrom at storeys, whereby
- a liner branch of an apartment or house sewer is installed directly after the branch of the vertical sewer liner branching at the storey.
This way, it is possible to coat by lining even all sewers of a multi-storey building, in accordance with the invention without drilling or the like making of holes.

In one embodiment of the invention, prior to installing a flexible liner inside a pipeline to be renovated,
- locations of branch points in the pipeline to be renovated, and the lengths and the thickness of pipe sections between the branch points, are measured and noted down.
When liners are manufactured and chosen in accordance with the noted measurements, liners, their branch points and branches can be placed precisely to desired locations.

In one embodiment of the invention,
- liners for the renovation site are manufactured and/or chosen in accordance with the measured and noted measurements so that in a ready pipeline,
   o the joint between the successive liners is placed at a distance from the pipeline branch points, and
   o liners to be installed successively are superposed for a superposing length required for connecting them tightly to each other, for a range of 0.01-0.5 m, 0.1-0.5 m, less than 1 m, less than 0.5 m, or less than 0.3 m, for example.
When liners are manufactured and chosen in accordance with the noted measurements, and placed precisely as desired in relation to each other, liners, their branch points and branches, and the joints and connections between them, can be achieved precisely as desired.

In one embodiment of the invention, each branch of the liner is at least 0.5 m, or at least 1 m long.

In one embodiment of the invention, the system comprises at least two liners adapted to be installed successively to each other, both liners having a branch point, from which more than two branches are branching, each branch being at least 0.5 m, or at least 1 m long.

In one embodiment of the invention, the liner comprises mainly parallel branches intended to be upwards and downwards in the vertical sewer of a multi-storey building, the branches having total length of at least 2 m, and at least one branch intended to be at a storey of the building.

In one embodiment of the invention, the liner comprises at least two branch points, from where more than two branches are branching. Such liner enables more efficient and better coating. Distance of the branch points of one liner from each other can be, for example, over 0.5 m, over 1 m, or over 2 m.

In one embodiment of the invention, the system comprises an installation device which is installed inside the liner when installing the liner. The installation device presses the liner against the inner surface of the pipe to be coated, especially during curing of the liner. The installation device can, for example, press the liner from inside of it towards the inner surface of the pipe by means of pressurized air.

One embodiment of the invention is a method in which an installation tool, flexible liner, as well as epoxy or the like curing material is used for curing and attaching the liner inside the pipeline. The installation tool comprises, for example, a frame having a length of approximately that of the liner to be installed, and, supported to it, an expansion bag to be filled by pressurized air when desired. By pressurizing the expansion bag by pressurized air, the liner can be pressed against the inner surface of the pipeline. When coating a pipeline branch point, a liner having several branches can be used. The expansion bag of the installation tool corresponds at least partly in its size and form to the liner to be installed, comprising also branch parts corresponding to the branches of the liner. In the method, a modular liner, for example its felt material, is entirely soaked with epoxy or the like agent. If necessary, the liner can be finished, for example by cutting it into desired size or shape. The installation tool and the liner are placed within each other so that the branches in the liner are set at the branch parts that are turned inside an empty bag of the installation tool. The branch parts of the liner are turned inside the branch parts of the expansion bag. Prior to being installed in the pipeline, a plastic protective bag, for example, can be additionally installed onto the liner. Protective bag may be, for example plastic, and it may cover the liner at least mainly. The purpose of the liner is to facilitate transferring the installation tool and the liner on top of it to the installation destination, inside the pipeline. Locations of the branches are clearly marked on the liner or on the protective bag on top of it. Once the protective bag is in correct place, the protective bag and the liner are attached to the installation tool. For example, the protective bag and the liner can be attached by tightening tape, steel wire or the like around the installation tool. Attachments can be at intervals of 0.1-0.4 m or 0.2-0.3 m, for example. This way, it is secured that the protective bag and the liner remain at their places on the installation tool while the ensemble is pushed into the sewer pipe. Before the ensemble is pushed into the sewer pipe, holes are cut in the protective bag, at the branches of the liner and the installation tool. If necessary, the protective bag can be shortened at the ends so that the modular liner felt, which is soaked with epoxy or other agent, remains visible for a suitable length, for example for 0.01-0.5 m, 0.05-0.3 m or 0.05-0.1 m. The installation tool, and the liner and possible protective bag placed onto it, are pushed or pulled into to a sewer so that the branches are positioned in correct places, that is at the pipeline branch sections. Correct positioning can be verified by cameras, for example. Markings made at the branches of the protective bag facilitate positioning of the branches. After the branches are positioned at their places, the expansion bag is pressurized, whereby the liner branches turned inside and the branch parts of the installation tool protrude and position at the branch parts of the pipeline to be renovated. The expansion bag is kept pressurized until epoxy or other agent is cured. After the liner is cured, pressure is removed from the expansion bag, whereby the installation tool may be removed from the pipeline. After this, the cured liner installed into the sewer pipeline can be roughened for a certain length, for example for 0.05-0.3 m, or 0.1-0.15 m from each end of the liner, so that the succeeding liners to be installed attach well to the preceding liner. Corresponding liner installations are proceeded through the real-estate until all sewer pipes are lined.

### BRIEF DESCRIPTION OF THE FIGURES

The invention is described in more detail below with reference to the enclosed schematic drawing, in which
- Figure 1: shows a block of flats and its sewer pipeline,
- Figure 2: shows one rising section of a block of flats sewer pipeline,
- Figure 3: shows an apartment sewer pipeline,
- Figure 4: shows a cross section of a sewer pipeline,
- Figure 5: shows a seam point between two liners
- Figure 6a: shows a step of one lining method, and
- Figure 6b: shows a step of another lining method.

### DETAILED DESCRIPTION OF THE EXAMPLES OF THE FIGURES

For some parts corresponding to each other, same reference numerals are used in different figures and embodiments for the sake of clarity. Different parts, such as liners and joints between them are often shown schematically in their measures and apart from each other, even though, in fact, the joints are tight, and the liners, for example, are usually intended to be tightly installed to the sewer pipe.

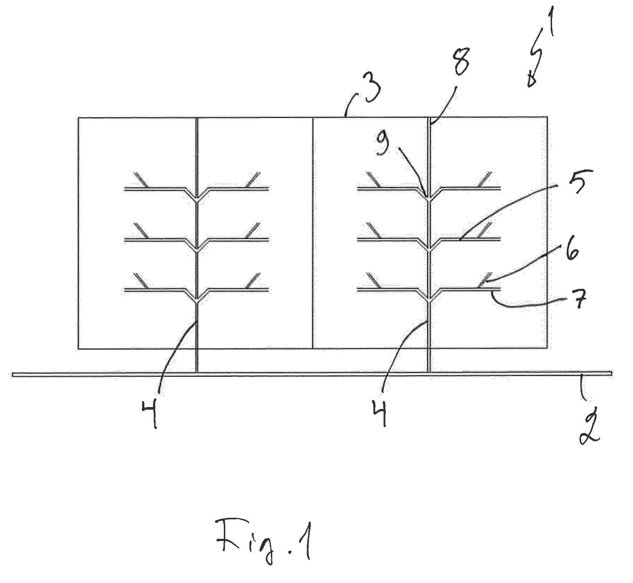

Figure 1 shows a block of flats 1. Underneath the block of flats 1, there is a main sewer 2 travelling under the street, for example. Two rising sections of the sewer branch upwards from the main sewer 2 to the house, that is, for example, mainly perpendicular vertical sewer 4 extending from under ground up to the house roof 3. At floor of each storey, mainly horizontal apartment sewers 5 branch at the branch points 9 from the vertical sewers 4. In the apartment sewers of the Figure, there are marked two branch sections 6 and 7 entering the apartment, which sections can lead, for example, to a toilet seat and a sink. At the upper end 8 of the vertical sewer, for example on the roof of a house, there is a service hatch (not shown), through which vertical sewer can be monitored, or service measures can be performed, for example to assist in the lining.

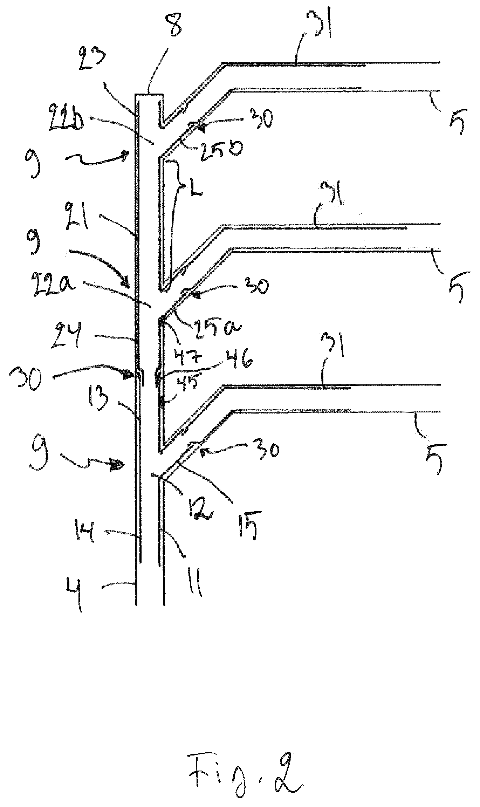

Figure 2 shows an example of a vertical sewer 4 of a block of flats and the apartment sewers 5 branching from it, after the lining according to the invention. Three liner branches extend from the branch point 12 of the first liner 11, a vertical branch 13 upwards, and a vertical branch 14 downwards, and a side branch 15 to the apartment sewer. The first liner covers the vertical sewer at the branch point 9 of the apartment sewer of the first storey, and along a distance of approximately 1.5 m below and above the branch point. The side branch 15 of the first liner covers the apartment sewer along a distance of approximately 0.5 m.

The second liner of Figure 2 has two branch points: a first branch point 22a at the second storey, and a second branch point 22b at the uppermost, the third storey. The downwards directed vertical branch 24 of the second liner is tightly attached to the upwards directed vertical branch 13 of the first liner, at the joint 30. Distance L between the first and the second branch points of the second liner is approximately 3 m. The branch 23 directed upwards from the second branch point 22b of the second liner extends nearly to the upper end 8 of the vertical sewer. The side branches 25a and 25b of the second liner 21 being directed to the apartment sewers 5 cover both apartment sewers along a distance of approximately 0.5 m.

In the example of Figure 2, a third liner 31, by which each apartment sewer is coated, is connected to each apartment sewer branch of the first and the second liner. There are no branch points in the apartment sewers, and, therefore, neither are there in the third liners.

In the example of Figure 2, the joints 30 between the first, second and third liner are highlighted showing the connections between the liners. At the joint, the liners overlap each other for a distance of 0.1-0.3 m, for example.

In the example of Figure 2, three sensors 45, 46 and 47 according to the invention are shown.

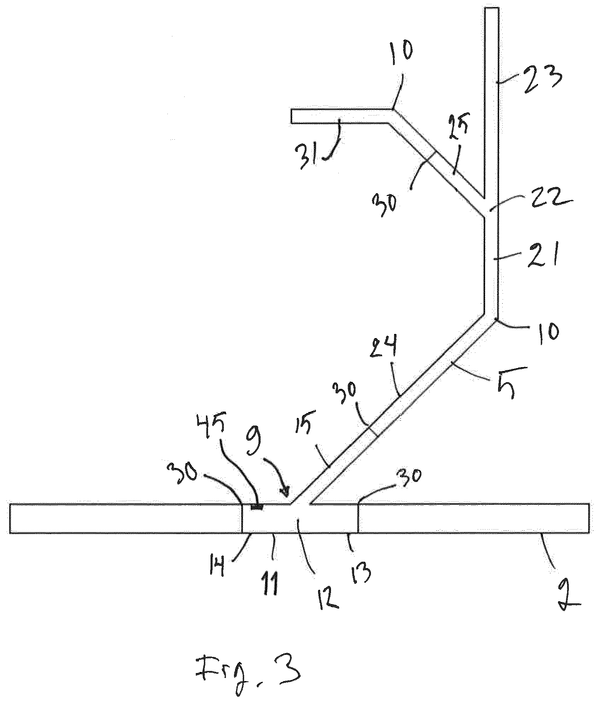

Figure 3 shows an example of lining of a mainly horizontal branching sewer. It can be an apartment sewer or part of it, for example. A first liner, a so called Y liner, is installed into the pipeline branch point 9, where the apartment sewer branches from the main sewer 2. There are two branches 13 and 14 larger in diameter branching from its branch point 12, that coat the main sewer, and the third branch 15 coats the beginning of the apartment sewer 5. The first branch 24 of the second liner 21 is installed behind the third branch 15 of the first liner. Also the second liner is a so called Y liner, that is that three branches extend from its branch point 22. There is a curve 10 at the first branch 24 of the second liner. From the branch point of the second liner, the second branch 23 branches towards the toilet seat, and the third branch 25 branches towards the sink. There is yet a third non-branching liner 31 having a curve 10, that is installed behind the third branch 25 of the second liner. The liners or the connections between them are not shown in more detail in Figure 3. At the connections between the liners, the liner branches may overlap for a distance of 0.1-0.2, for example.

It can be noted from the example of Figure 3, how the liners are made just the proper size and form. This usually requires relatively precise measurement of the pipeline to be renovated prior to choosing or preparing the liners. Measurement can be made from the construction drawings or by some other way. There are, for example, different scanning methods which are suitable for pipeline measuring and which can be used in renovation planning.

The example of Figure 3 shows an exemplary location close to the joint 30 for a sensor 45 according to the invention.

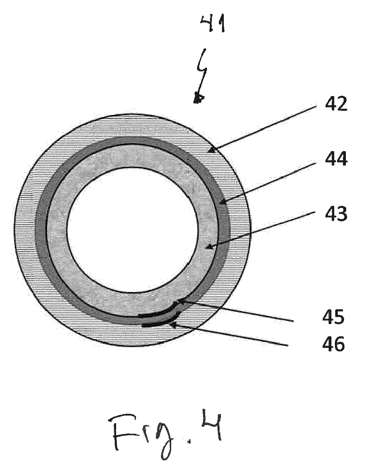

Figure 4 shows a cross section of a pipe 41, for example a sewer pipe, renovated according to the invention. Inside the old pipe, for example cast-iron pipe 42, a new inner pipe 43 has been formed from the cured liner. The protective layer 44 that was attached in the installing stage onto the liner to protect the liner, is left between the old pipe and the new inner pipe. The protective layer, in its part, also seals the renovated pipeline. There are two sensors 45 and 46 placed between the new inner pipe and the old pipe. The sensors can be humidity sensors, for example, by means of which possible water leakage through the new inner pipe can be noticed, for example. The example of Figure 4 shows two different locations for a sensor. If the pipe has a protective layer, the sensor can be attached either on the inner pipe side of the protective layer, such as the sensor 45, or on the old pipe side of the protective layer, such as the sensor 46. It is possible to attach the sensor also directly to the old pipe 42 to be renovated, to its inner surface, or to its outer surface. The sensor can be remote readable, for example by using RFID technique.

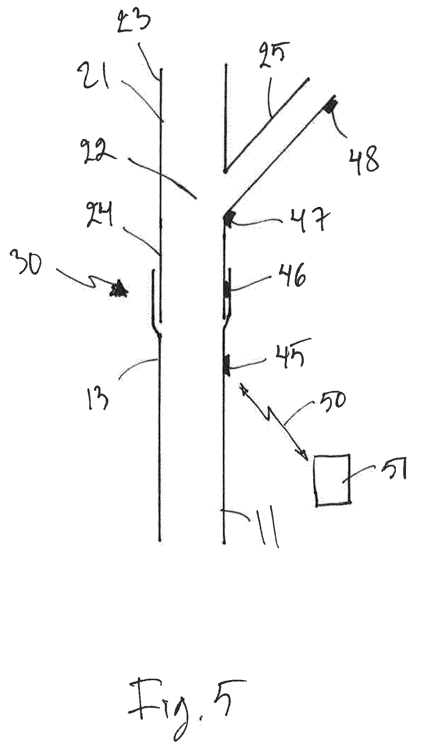

Figure 5 shows a joint 30 between two liners 11 and 21, as well as several possible locations of a humidity sensor or other sensor in the liner. The sensor 45 is located below the joint 30. The sensor 46 is located between the ends of the branches 13 and 24 that are glued on top of each other at the joint 30. The sensor 47 is at the branch point 22 of the liner 21, and the sensor 48 is at the end of the branch 25 of the liner 21, or close to its end. Sensors can be attached to all kinds of liners, for example to a non-branching liner or to a liner comprising two or more branch points. For the sake of clarity, Figure 5 shows only the liners 11 and 12 according to the invention, and not the pipeline into which the liners are cured.

Figure 5 shows schematically the wireless data transfer between the sensor 45 and the receiver of the reporting system 51. The sensor 45 can send, for example data about humidity and temperature it has measured, as well as its own identification information. The reporting system 51 compares measuring results by the sensor with the predetermined alarm levels. If the alarm level is exceeded, the reporting system 51 sends system user an alarm, and informs the location and type of emergency on basis of the measuring results and identification information obtained.

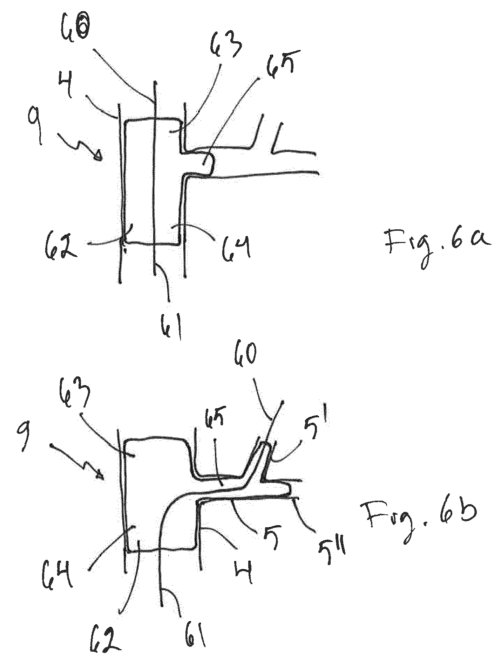

Figures 6a and 6b show a pipeline branch point 9, wherein an installation tool 60 is schematically shown. The installation tool has a frame 61 and an expansion bag 62 attached thereto. The expansion bag can be emptied and pressurized by pressurized air. Liner to be installed or details of the installation tool known as such are not shown in Figures for clarity's sake. The liner is formed mainly in the form of the expansion bag. The frame of the installation tool comprises a wire, flexible bar or the like, by means of which the installation tool or the liner on top of it can be pushed or pulled even to a bended pipe.

Figure 6a shows the way in which the installation tool 60 is in a main sewer, for example in a vertical sewer 4 of a block of flats. The installation tool conveys along with it the branches 64 and 63 of the expansion bag, that are intended downwards and upwards in the main sewer, to their accurate positions. When the expansion bag is pressurized, the branch 65 of the expansion bag, that is intended for the pipeline branch section, for example for an apartment sewer 5, expands out and protrudes into the apartment sewer. At the same time, the expansion bag conveys along with it the liner branch on top of it to the apartment sewer. The expansion bag is kept under pressure until the liner is cured.

Figure 6b shows the way in which the installation tool 60 has its first end in a main sewer, for example in the vertical sewer 4 of a block of flats. The second end of the installation tool is led to a pipeline branch section, such as the apartment sewer 5, and further to a next branch section, such as the toilet sewer pipe 5'. The installation tool has conveyed branch sections 64 and 65 of the expansion bag along with it to their accurate locations along its path. The branch 63 of the expansion bag that is directed upwards in the main sewer, as well as branch sections directed to other branch sections, such as to the sink sewer 5", expand out when the expansion bag is pressurized, and protrude into their locations. At the same time, the expansion bag conveys along with it the branches of the liner on top of it. The expansion bag is kept under pressure until the liner is cured.

It is not intended to limit the scope of the invention to the examples mentioned in the application, but the scope is defined by the independent claims. The dependent claims present some preferred embodiments of the invention.

## Claims

1. Liner (11, 21, 43) which is meant to be cured inside a pipe (2, 4, 5, 42) to be repaired or coated, **characterised in that** at least one sensor (45, 46, 47, 48) is attached to the liner for measuring humidity level of the renovated pipeline or its surroundings.

2. Liner according to claim 1, **characterised in that** at least one sensor is attached to the liner for measuring temperature level of the renovated pipeline or its surroundings.

3. Liner according to claim 1 or 2, **characterised in that** the liner comprises a protective bag or a protective layer (44) surrounding it.

4. Liner according to claim 3, **characterised in that** at least the said sensor is attached to the protective bag or protective layer.

5. Liner according to any of the preceding claims, **characterised in that** the sensor comprises data transfer means, by means of which the data measured by the sensor can wirelessly be sent to a receiver.

6. Liner according to claim 5, **characterised in that** the receiver is arranged to transfer the information measured by the sensor further to a computer program, for example to a computer program monitoring condition of the pipeline.

7. Liner according to any of the preceding claims 5 or 6, **characterised in that** the data transfer means are wireless.

8. Liner according to any of the preceding claims, **characterised in that** the liner has at least one branch point, where more than two branches are branching, each branch being at least 0.5 m long.

9. Liner according to claim 8, **characterised in that** the sensor is attached close to the branch point, for example less than 0.5 m or less than 0.2 m from a junction of two branches.

10. Liner according to any of the preceding claims, **characterised in that** the sensor is attached to a fastening base attached to the liner.

11. Liner according to claim 10, **characterised in that** the fastening base is water proof preventing humidity from entering to the sensor from the direction of the fastening base.

12. Liner according to one of the preceding claims, **characterised in that** the sensor is integrated by means of printing technique directly onto the surface of the liner or the protective bag or protective layer surrounding it or the fastening base.

13. Method for monitoring of quality of pipeline renovation after the renovation, **characterised in** measuring humidity level of a renovated pipeline (2, 4, 5, 42) or its surroundings by means of at least one sensor (45, 46, 47, 48) that is attached to a liner (11, 21, 43) cured inside a renovated or coated pipe, or to a protective bag or protective layer (44) surrounding the liner.

14. Method according to claim 13, **characterised in** sending the data measured by the sensor by means of data transfer means to a receiver, for example wirelessly.

15. Method according to claim 13 or 14, **characterised in that** several sensors are placed in the renovated pipeline, location of which sensors is known precisely, whereby humidity level measured by several sensors is monitored in the method, and in case the humidity level exceeds a predetermined alarm level in one of the sensors, an alarm is sent to the system user, and exact location of the alarming sensor is notified.
